Europäisches Patentamt

(19) European Patent Office  (11) Publication number: **0 209 958**

Office européen des brevets  **B1**

(12) EUROPEAN PATENT SPECIFICATION

(45) Date of publication of the patent specification: **04.10.89**  (51) Int. Cl.⁴: **A01G 31/00**

(21) Application number: **86201295.2**

(22) Date of filing: **22.07.86**

(54) **Water-absorbing porous product for the cultivation of plants and method for the cultivation of plants by means of a water-absorbing product.**

(30) Priority: **22.07.85 NL 8502103**

(43) Date of publication of application:
**28.01.87 Bulletin 87/5**

(45) Publication of the grant of the patent:
**04.10.89 Bulletin 89/40**

(84) Designated Contracting States:
**AT BE CH DE FR GB IT LI LU NL SE**

(56) References cited:
**EP-A- 0 144 300**
**BE-A- 652 757**
**DE-A- 3 121 277**

(73) Proprietor: **Rockwool Lapinus B.V., Industrieweg 15, NL-6074 NH Melick-Herkenbosch(NL)**

(72) Inventor: **Blok, Christian, Ir., 7, Molenbergweg, NL-6705 AB Herkenbosch(NL)**

(74) Representative: **Prins, Hendrik Willem et al, Octrooibureau Arnold & Siedsma Sweelinckplein, 1, NL-2517 GK The Hague(NL)**

ACTORUM AG

## Description

The invention relates to a water-absorbing product for the cultivation of plants in a substrate culture, comprising water-absorbing mineral fibres and water-repellant, oxygen-storing elements.

Such a water-absorbing product is disclosed in DE-A 3 121 277. This product consists of a non-coherent mixture of granules of expanded clay as incompressive oxygen stores, and of flakes of mineral wool as the water-absorbing material. This product is not suitable for use in a substrate culture because its ingredients form a non-coherent mixture, so that its use in a substrate culture necessitates the use of a holder. Furthermore, the clay granules are impermeable for the plant roots and interfere the normal root forming. Finally, due to the non-coherency the oxygen-storing elements cannot de present during use as a layer.

The object of the invention is to provide a water-absorbing porous product which does not possess the afore-mentioned draw-backs but in which oxygen is always present in the product wetted with water.

This is achieved according to the invention in that the product is coherent block-shapes/product comprising a porous structure of mineral fibres and the water-repellant, oxygen-storing elements are present in the porous structure of mineral fibres as at least one layer between two layers of water-absorbing mineral fibres.

The presence of water-repellant oxygen-storing elements of this type has the result that after the first wetting of the water-absorbing porous product, regions continue to exist in which oxygen is located which can be released in a delayed manner to the liquid absorbed in the porous product, so that sufficient oxygen can always be supplied to the roots and an excellent growth is therefore guaranteed.

Expediently the oxygen-storing elements are water-repellant porous elements such as elements made of foam plastics with open cells or porous water-repellant flakes of fibrous material. Preferably use is made of water-repellant flakes of mineral wool fibres which form a very cheap product.

If the oxygen-storing water-repellant elements form one or more layers between two leayers of water-absorning mineral wool, it is possible to provide oxygen or air at the desired height in the correct quantity. At the same time the volume of the water-repellant elements can obviously be varied for various heights within the water-absorbing porous product, while the thickness of the water-repellant elements in the layer may itself also vary.

The invention also relates to a method for manufacturing a water-absorbing product for the cultivation of plants in a substrate culture, comprising a porous structure of mineral fibres in which water-repellant, oxygen-storing elements are trapped, comprising the steps of:

a. melting a mineral product, and forming from the melt a porous strip of water-absorbing mineral fibres;

b. applying water-repellant, oxygen-storing elements on the strip;
c. folding the strip; and
d. cutting out the product in form of a block.

The formation of the strip takes place in a manner known per se by forming the mineral wool fibre material borne by an air stream and treated with a wetting agent into a porous layer.

The oxygen-storing elements are provided layerwise in the product to be formed in view of the fact that it is sufficient in this connection to pour the water-repellent oxygen-containing elements onto a layer of the water-absorbing material and then to fold said layer once or several times so that a final product is obtained which contains one or more layers of the water-repellent porous elements.

In that case a porous layer of water-absorbing mineral wool fibres is first formed after which a layer of oxygen-storing porous elements is provided on the layer formed in this manner. By turning the double layer formed over once or several times a product is obtained which contains one or more layers of oxygen-storing porous elements between layers of water-absorbing mineral wool.

The finished product preferably has the shape of a small block. A shape of this type self-evidently offers advantages during transport and storage as a result of the good stackability and in addition, the product is then available in the shape finally used.

The oxygen-storing water-repellent elements may however, also be provided as a layer in groove-like recesses.

Preferably the water-repellent oxygen-storing elements are provided in a manner such that they are in contact with the outside air.

The invention will now be explained on the basis of an exemplary embodiment by means of the drawing in which:

Figure 1 shows a block-shaped water-absorbing porous product according to the invention;

Figure 2 is a section of a water-absorbing porous product of this type according to the invention in which there are several layers of oxygen-storing elements situated at a distance from each other;

Figure 3 is another embodiment of a water-absorbing porous product according to the invention in which the oxygen-storing elements are wedge-shaped;

Figure 4 is yet another embodiment of a water-absorbing porous product according to the invention with oxygen-storing elements provided in a groove-like recess;

Figure 5 shows a diagrammatically represented device for the manufacture of a water-absorbing porous product according to the invention;

Figure 6 is a cross-section of a strip obtained as in Figure 5 of mineral fibrous material on which there are water-repellent oxygen-storing elements, which strip has been folded in a suitable manner to form water-absorbing porous products into a block shape as in Figures 1 or 2;

Figure 7 is a cross section of a strip, not yet folded, obtained as in Figure 5 for the manufacture of a water-absorbing porous product as in Figure 3, and Figure 8 shows diagrammatically and in perspective a possible device for the shaping of the strip as in Figure 7.

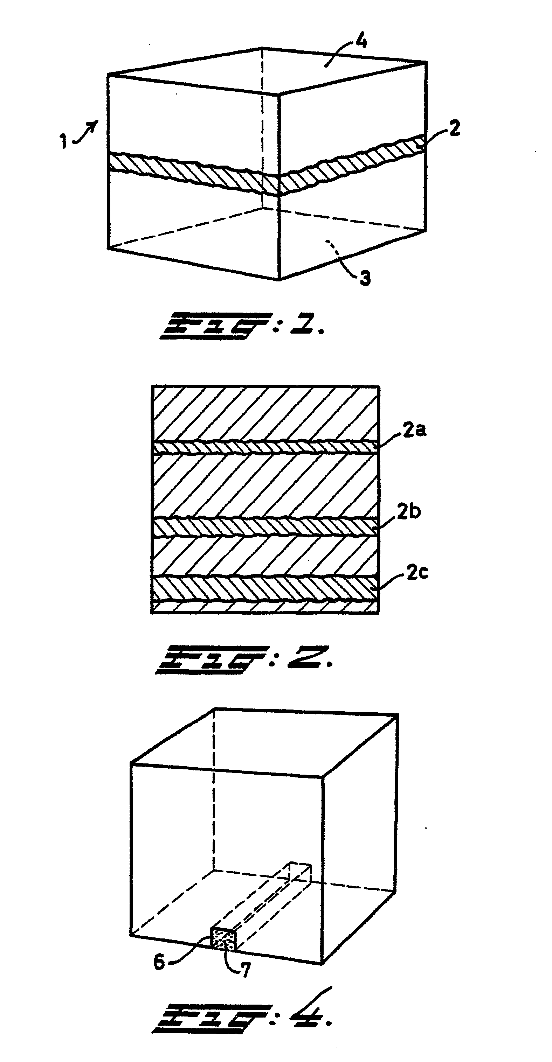

Figure 1 shows a small block 1 of a water-absorbing porous product consisting of a water-absorbing mineral fibrous material, in particular mineral wool. Between the underside 3 and the upper side 4 of a small block 1 there is embedded inthe water-absorbing mineral wool product a layer 2 of water repellent mineral wool flakes. As a result of the porous structure of said water-repellent mineral wool flakes there is a quantity of air in said flakes which is able to supply oxygen to the roots which are produced in a small block of this type when it is desired to cultivate a plant in a small block of this type. Suitable plants are, for example, various flowering plants, cucumbers, strawberries and the like.

Instead of water-repellent mineral wool flakes use may also be made, for example, of foam plastics with open cells such as, for example, polystyrene foams, which are water-repellent per se and retain air in their pores, for forming the intermediate layer 2.

When the small block 1 is placed in a trough through which a plant nutritive medium is flowing, said plant nutritive medium will be taken up immediately by the water-absorbing porous small block 1 and will expel air from said water-absorbing porous product.

This would mean that thereafter virtually no air would be present any longer in the small block and no oxygen is therefore available for supplying to the plants which form in the small block during the cultivation of a plant.

The invention overcomes this drawback by the provision of the said layer 2.

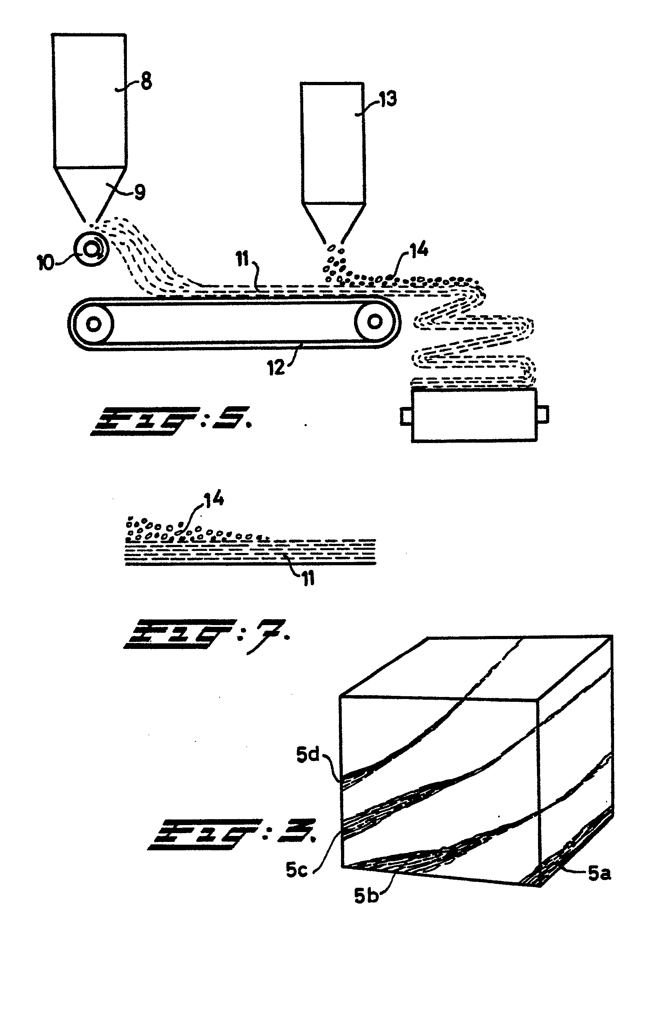

Figure 2 shows an embodiment in which there are layers 2a, 2b and 2c of water-repellent oxygen-storing elements of this type in the form of water-repellent mineral wool flakes, at various heights in the small block. The layers 2a, 2b and 2c open into the outside air so that continuously air is able to penetrate into said layers. As a result of this, during the cultivation process oxygen can always be made available to the roots which penetrate further into the small block.

In view of the increase in the number of roots during the further course of the cultivation, it is advisable for the lowermost layer 2c of the water-repellent oxygen-storing elements which are nearest the bottom of the small block 1 to be constructed more thickly than the layer 2a being situated nearer the top of the small block 1.

An essential feature of the invention is that the water-repellent elements such as foam plastics blocks with open cells or water-repellent flakes of mineral fibres retain a quantity of oxygen when fluid penetrates through the entire small block 1.

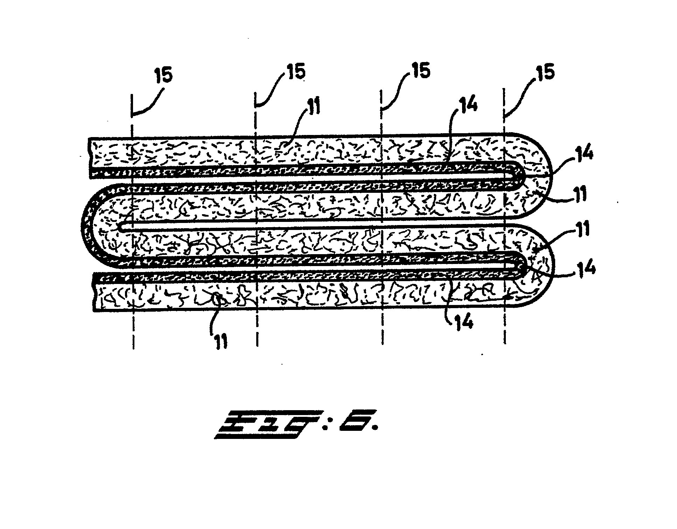

Figure 3 shows another embodiment in which wedgeshaped water-repellent oxygen-containing elements 5a to 5d incl. are present in the small block between the water-absorbing porous layers. This wedge shape promotes the absorption of oxygen from outside and better root hair formation. The wedge-shaped layers may, if desired, become thicker towards the bottom of the small block and/or extend up to the top of the small block.

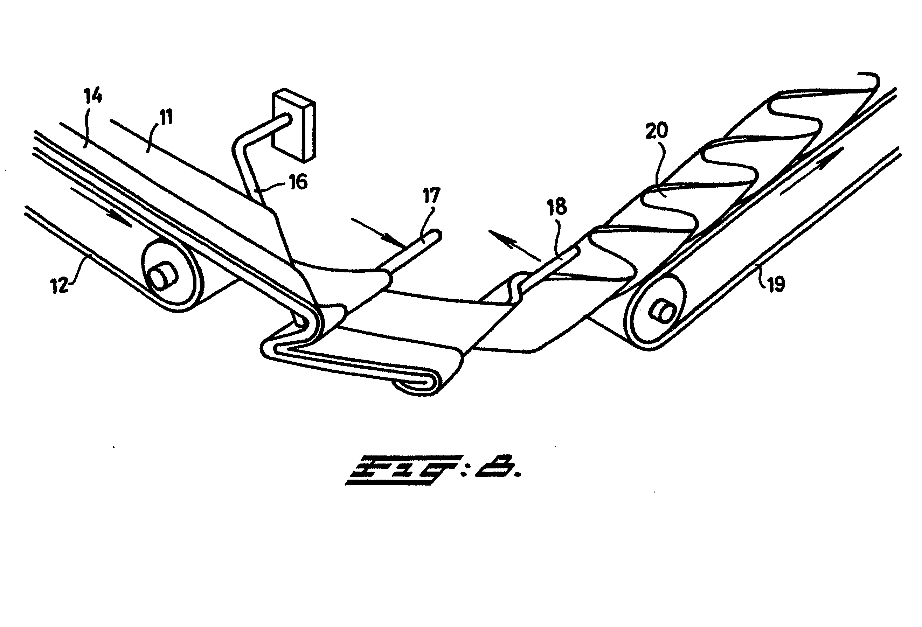

Figure 4 shows yet another embodiment in which the small block is provided at the bottom with a groove-like recess 6 in which water-repellent oxygen-storing elements 7 are provided, as a result of which sufficient oxygen is always available.

Figure 5 shows diagrammatically a device for the manufacture of a strip of water-absorbing porous product made of water-absorbing mineral fibrous material with water-repellent oxygen-storing elements provided thereon in the form of water-repellent fibres of mineral wool.

From a diagrammatically shown melting furnace 8 molten mineral product is brought via a feed device 9 onto a rotating roller 10, which mineral product is hurled by the rotating roller 10 from this point to form mineral wool fibres which deposit as a uniform strip 11 of water-absorbing mineral wool which is supported by an endless belt 12.

From a feed 13a layer 14 of water-repellent mineral wool fibres is provided on the strip 11. Said strip may yield small blocks 1 by folding together and cutting out.

Figure 6 shows diagrammatically a strip of water-absorbing mineral wool 11 folded together several times on which a layer 14 is provided of water-repellent flakes of mineral wool. Said strip has been folded several times in a zigzag fashion, after which small blocks 1, such a shown in Figure 1, can be cut out a strip of this type along the broken lines 15.

It will be clear that in the embodiment shown in Figure 6 the layers of water-repellent oxygen-storing elements can nevertheless be given different thicknesses by making use, for example, of several feeds 13, as a result of which an additional layer of the water-repellent elements can be provided.

It is also possible to provide via a feed 13 a layer 14 of mineral wool fibres made water-repellent only on a section of the strip 11 of water-absorbing mineral wool, the cross-section of the layer 14 being wedge-shaped as is shown in Figure 7.

A strip of this type is used to manufacture the water-absorbing porous small blocks shown in Figure 3 with wedge-shaped oxygen-storing elements.

Figure 8 shows diagrammatically how from a strip of this type a folded-together strip can be obtained from which the small blocks as in Figure 3 can be cut.

The strip 11 coming off the endless belt 12 with the layer 14 provided thereon is first passed over, for example, a rod-shaped element 16 which is at an angle of approximately 45° with respect to the longitudinal direction of the endless belt 12. The strip which is then hanging downwards is then given a zigzag form by reciprocating elements 17 and 18 and laid in roof-tile fashion on a second endless belt 19 which is approximately at an angle of 90° with respect to the first belt 12 and which removes the folded strip 20 sideways. The giving of a zigzag form to the strip 11 may, of course, take place by means of a recipro-

cating fork-shaped element, the strip 11 passing between the legs of the fork. The small blocks such as shown in Figure 3 are finally cut from the strip 20.

**Claims**

1. Water-absorbing product (1) for the cultivation of plants in a substrate culture, comprising water-absorbing mineral fibres and water-repellant, oxygen-storing elements (5), characterized in that the product is a coherent, block-shaped product comprising a porous structure of mineral fibres (11) and the water-repellant, oxygen-storing elements (5) are present in the porous structure of mineral fibres as at least one layer (2, 14) between two layers (11) of water-absorbing mineral fibres.

2. Water-absorbing product (1) as claimed in claim 1, wherein at least two layers (2a, 2b, 2c, 5a, 5b, 5c, 14) of oxygen-storing elements (5) are present, and that the volume of the water-repellant elements of the layers increases in the direction towards the bottom side (3) of the product (1).

3. Water-absorbing product (1) as claimed in claim 1 or 2, wherein parts of a layer (2a, 2b, 2c, 5a, 5b, 5c) of oxygen storing elements (5) are of different thickness.

4. Water-absorbing product as claimed in claim 3, wherein the volume of the water-repellant elements (5a, 5b, 5c) of a layer converges in an inwardly direction of the product (1).

5. Water-absorbing product (1) as claimed in claim 1–4, wherein the layer (2, 5, 14) of oxygen-storing elements (5) is in gas contact with the outer atmosphere.

6. Water-absorbing product (1) as claimed in claim 1–5, wherein the layer (5a, 5b, 5c) of oxygen-storing elements (5) inclines with respect to the bottom side (13) of the product (1).

7. Water-absorbing product (1) as claimed in claim 1–6, wherein at least partly the oxygen-storing elements (5) are provided as a layer (7) in a recess (6) arranged in the bottom side (3) of the product (1).

8. Water-absorbing product as claimed in claim 1–7, wherein the oxygen-storing elements (5) consist of water-repellant mineral wool.

9. Method for manufacturing a water-absorbing product (1) for the cultivation of plants in a substrate culture, comprising a porous structure of mineral fibres in which water-repellant, oxygen-storing elements (2, 5) are trapped, comprising the steps of:
    a. melting a mineral product, and forming from the melt a porous strip (11) of water-absorbing mineral fibres;
    b. applying water-repellant, oxygen-storing elements (2, 5) on the strip (11);
    c. folding the strip (11); and
    d. cutting out the product (1) in form of a block.

10. Method as claimed in claim 9, wherein the elements (14) are applied over a part of the width of the strip (11).

11. Method as claimed in claim 9 or 10, wherein the amount of elements (14) applied on the strip (11) varies over the width of the strip (11).

12. Method as claimed in claim 11, wherein the amount of elements (14) applied on the strip (11) decreases starting from one lateral strip side.

13. Method as claimed in claim 9–12, wherein the strip (11) is folded in a roof-tile fashion.

14. Method as claimed in claim 9–13, wherein the water-repellant, oxygen-storing elements (2, 5, 14) consist of mineral flakes (2, 5, 14).

**Patentansprüche**

1. Wasserabsorbierendes Produkt (1) für das Pflanzenwachstum in einer Substratkultur, bestehend aus wasserabsorbierenden Mineralfasern und wasserabstoßenden, sauerstoff-speichernden Elementen (5), dadurch gekennzeichnet, daß das Produkt (1) ein kohärentes, blockförmiges Produkt mit einer porösen Struktur aus Mineralfasern (11) ist, wobei die sauerstoff-speichernden Elemente (5) in der porösen Struktur aus Mineralfasern in wenigstens einer Schicht (2, 14) zwischen zwei Schichten (11) aus wasserabstoßenden Mineralfasern vorhanden sind.

2. Wasserabsorbierendes Produkt (1) nach Anspruch 1, dadurch gekennzeichnet, daß wenigstens zwei Schichten (2a, 2b, 2c, 5a, 5b, 5c, 14) sauerstoff-speichernde Elemente (5) vorhanden sind, und daß das Volumen der wasserabstoßenden Elemente (5a, 5b, 5c) der Schichten in Richtung auf die Unterseite (3) des Produkts zu, zunimmt.

3. Wasserabsorbierendes Produkt (1) nach Anspruch 1 oder 2, dadurch gekennzeichnet, daß Teile einer Schicht (2a, 2b, 2c, 5a, 5b, 5c) aus sauerstoffspeichernden Elementen (5) unterschiedlicher Dicke bestehen.

4. Wasserabsorbierendes Produkt nach Anspruch 3, dadurch gekennzeichnet, daß das Volumen der wasserabsorbierenden Elemente (5a, 5b, 5c) einer Schicht in Richtung zum Inneren des Produkts (1) hin konvergiert.

5. Wasserabsorbierenden Produkt nach Anspruch 1, dadurch gekennzeichnet, daß die Schicht (2, 5, 14) der sauerstoffspeichernden Elemente (5) mit der Außenatmosphäre in Gaskontakt steht.

6. Wasserabsorbierendes Produkt (1) nach Anspruch 1 bis 5, dadurch gekennzeichnet, daß die Schicht (5a, 5b, 5c) der sauerstoffbindenden Elemente (5) zur Unterseite (12) des Produkts (1) hin geneigt ist.

7. Wasserabsorbierendes Produkt (1) nach Anspruch 1 bis 6, dadurch gekennzeichnet, daß die sauerstoff-speichernden Elemente (5) wenigstens teilweise als eine Schicht (7) in einer Aussparung (6) an der Unterseite (3) des Produkts (1) angeordnet sind.

8. Wasserabsorbierendes Produkt (1) nach Anspruch 1 bis 7, dadurch gekennzeichnet, daß die sauerstoff-speichernden Elemente (5) aus wasserabstoßender Mineralwolle bestehen.

9. Verfahren zur Herstellung eines wasserabsorbierenden Produktes (1) für das Pflanzenwachstum in einer Substratkultur, bestehend aus einer porösen Struktur aus Mineralfasern, in denen wasserabstoßende, sauerstoff-speichernde Elemente (2, 5) eingeschlossen sind gekennzeichnet durch die Arbeitsschritte:

a) Schmelzen eines Mineralprodukts und Erzeugen eines porösen Streifens (11) aus wasserabsorbierenden Mineralfasern aus der Schmelze;

b) Aufbringen von wasserabstoßenden, sauerstoff-speichernden Elementen (2, 5) auf den Streifen (11);

c) Falten des Streifens (11); und

d) Ausschneiden des Produkts (1) in Form eines Blocks.

10. Verfahren nach Anspruch 9, dadurch gekennzeichnet, daß die Elemente (14) auf einen Teil der Breite des Streifens (11) aufgebracht werden.

11. Verfahren nach Anspruch 9 oder 10, dadurch gekennzeichnet, daß die Anzahl der auf dem Streifen (11) aufgebrachten Elemente (14) über die Breite des Streifens (11) hinweg variiert.

12. Verfahren nach Anspruch 11, dadurch gekennzeichnet, daß die Anzahl der auf den Streifen aufgebrachten Elemente (14) ausgehend von der einen Seite des Streifens abnimmt.

13. Verfahren nach Anspruch 9 bis 12, dadurch gekennzeichnet, daß der Streifen (11) dachziegelartig gefaltet wird.

14. Verfahren nach Anspruch 9 bis 13, dadurch gekennzeichnet, daß die wasserabstoßenden sauerstoff-speichernden Elemente (2, 5, 14) aus Mineralplättchen bestehen.

## Revendications

1. Produit absorbant de l'eau (1) destiné à la culture de plantes dans un mode de culture sur substrat, comprenant des fibres minérales absorbantes de l'eau et des éléments hydrofuges (5) de stockage de l'oxygène, caractérisé en ce que le produit est un produit cohérent, en forme de bloc, qui comprend une structure poreuse de fibres minérales (11) et en ce que les éléments hydrofuges (5) de stockage de l'oxygène, sont présents dans la structure poreuse des fibres minérales sous la forme d'au moins une couche (2, 14) interposée entre deux couches (11) de fibres minérales absorbantes de l'eau.

2. Produit absorbant de l'eau (1) selon la revendication 1, caractérisé en ce qu'il comprend au moins deux couches (2a, 2b, 2c, 5a, 5b, 5c, 14) d'éléments (5) de stockage de l'oxygène, et en ce que le volume des éléments hydrofuges des couches croît dans le sens allant vers la face inférieure (3) du produit (1).

3. Produit absorbant de l'eau (1) selon l'une des revendications 1 et 2, caractérisé en ce que différentes parties d'une couche (2a, 2b, 2c, 5a, 5b, 5c) d'éléments (5) de stockage de l'oxygène, sont d'épaisseurs différentes.

4. Produit absorbant de l'eau (1) selon la revendication 1, caractérisé en ce que le volume des éléments hydrofuges (5a, 5b, 5c) d'une couche décroît dans le sens allant vers l'intérieur du produit (1).

5. Produit absorbant de l'eau (1) selon l'une des revendications 1 à 4, caractérisé en ce que la couche (2, 5, 14) d'éléments de stockage de l'oxygène est en contact gazeux avec l'atmosphère extérieure.

6. Produit absorbant de l'eau (1) selon l'une des revendications 1 à 5, caractérisé en ce que la couche (5a, 5b, 5c) d'éléments de stockage de l'oxygène (5) est inclinée par rapport à la face inférieure (13) du produit (1).

7. Produit absorbant de l'eau (1) selon l'une des revendications 1 à 6, caractérisé en ce qu'au moins en partie, les éléments (5) de stockage de l'oxygène sont prévus sous la forme d'une couche (7) logée dans une cavité (6) ménagée dans la face inférieure (3) du produit (1).

8. Produit absorbant de l'eau (1) selon l'une des revendications 1 à 7, caractérisé en ce que les éléments (5) de stockage de l'oxygène sont composés de laine minérale hydrofuge.

9. Procédé de fabrication d'un produit absorbant de l'eau (1) destiné à la culture des plantes dans une culture sur substrat, comprenant une structure poreuse de fibres minérales dans laquelle sont emprisonnés des éléments hydrofuges de stockage de l'oxygène (2, 5), caractérisé en ce qu'il comprend les phases consistant à:

a. faire fondre un produit minéral et former à partir de la masse fondue une bande poreuse (11) de fibres minérales absorbantes de l'eau;

b. déposer des éléments hydrofuges de stockage de l'oxygène (2, 5) sur la bande (11);

c. plier la bande (11); et

d. découper le produit (1) en blocs.

10. Procédé selon la revendication 9, caractérisé en ce que les éléments (14) sont déposés sur au moins une partie de la largeur de la bande (11).

11. Procédé selon l'une des revendications 9 et 10, caractérisé en ce que la quantité d'éléments (14) déposés sur la bande (11) varie sur la largeur de la bande (11).

12. Procédé selon la revendication 11, caractérisé en ce que la quantité d'éléments (14) déposés sur la bande (11) décroît en partant d'un côté latéral de la bande.

13. Procédé selon l'une des revendications 9 à 12, caractérisé en ce que la bande (11) est pliée en écailles.

14. Procédé selon l'une des revendications 9 à 13, caractérisé en ce que les éléments hydrofuges de stockage de l'oxygène (2, 5, 14) sont composés de flocons minéraux.

EP 0 209 958 B1

FIG: 1.

FIG: 2.

FIG: 4.

FIG: 5.

FIG: 7.

FIG: 3.

FIG: 6.

Fig. 8